(19) **Europäisches Patentamt / European Patent Office / Office européen des brevets**

(11) **EP 4 603 884 A1**

(12) # EUROPEAN PATENT APPLICATION
published in accordance with Art. 153(4) EPC

(43) Date of publication:
**20.08.2025 Bulletin 2025/34**

(21) Application number: **23876968.1**

(22) Date of filing: **20.07.2023**

(51) International Patent Classification (IPC):
**G02B 6/38** $^{(2006.01)}$    **G02B 6/02** $^{(2006.01)}$

(52) Cooperative Patent Classification (CPC):
**G02B 6/02; G02B 6/38**

(86) International application number:
**PCT/JP2023/026692**

(87) International publication number:
**WO 2024/079959 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2022 JP 2022164095**

(71) Applicant: **Fujikura Ltd.**
**Tokyo 135-8512 (JP)**

(72) Inventors:
• **MIDORIKAWA, Ryo**
**Sakura-shi, Chiba 285-8550 (JP)**
• **ISHIKURA, Norihiro**
**Sakura-shi, Chiba 285-8550 (JP)**

(74) Representative: **Hoffmann Eitle**
**Patent- und Rechtsanwälte PartmbB**
**Arabellastraße 30**
**81925 München (DE)**

(54) **OPTICAL CONNECTOR**

(57) An optical connector 1 includes: a multi-core fiber 10 including a plurality of cores 11; and a ferrule 20 having a through-hole 23 into which one end side of the multi-core fiber 10 is inserted, in which an end face 25 of the ferrule 20 overlaps a spherical plane SS that is tangent to an inclined plane FS on a center axis 23C of the through-hole 23, the inclined plane FS being inclined with respect to a perpendicular plane FP perpendicular to the center axis, an end face 15 on the one end side of the multi-core fiber 10 is inclined toward the same side as a side toward which the inclined plane FS is inclined with respect to the perpendicular plane FP, the following expression, in which a curvature radius of the spherical plane SS is B (mm), an eccentricity amount which is a distance between the center axis 23C, the spherical plane SS, and a top position TP most protruding from a line CL connecting edges ED of the end face 25 in a cross section passing through the center axis 23C and perpendicular to the inclined plane FS is C ($\mu$m), and a distance between the center axis 23C and the center of the core 11 positioned farthest from the center axis 23C when viewed along the center axis 23C is x, is satisfied.

FIG. 3

EP 4 603 884 A1

**Description**

Technical Field

The present invention relates to an optical connector.

Background Art

A multi-core fiber in which a plurality of cores are disposed in a cladding is known. Patent Literature 1 below describes an optical connector that presses and connects end faces of a pair of multi-core fibers. Patent Literature 1 describes a condition for connecting the respective cores of the multi-core fiber so as to be in physical contact with each other. The end face of the multi-core fiber is substantially perpendicular to a longitudinal direction of the multi-core fiber and is formed in a curved shape with a convex center. Such an optical connector may be referred to as an ultra-physical contact (UPC) connector.

[Patent Literature 1] US 10,989,882 B2

Summary of Invention

Meanwhile, in a sensor that measures distortion or the like by an optical fiber, reflection at an optical connector to which the optical fibers are connected is required to be minimal, and therefore, an angled physical contact (APC) connector in which an end face of an optical fiber is inclined with respect to a plane perpendicular to a longitudinal direction of the optical fiber may be used. For this reason, even in a case where a multi-core fiber is used for the sensor, the APC connector is preferably used because it is required that the reflection at the optical connector is minimal. Even in a case where the multi-core fibers are connected to each other by the APC connector, it is preferable that the reflection is suppressed by physical contact between cores of the respective multi-core fibers. However, in Patent Literature 1, the APC connector is not considered.

Therefore, an object of the present invention is to provide an optical connector capable of suppressing reflection at a connecting part.

In order to achieve the above object, a first aspect of the present invention is an optical connector including: a multi-core fiber including a plurality of cores; and a ferrule having a through-hole into which one end side of the multi-core fiber is inserted, in which an end face of the ferrule overlaps a spherical plane that is tangent to an inclined plane on the center axis, the inclined plane being inclined with respect to a perpendicular plane perpendicular to a center axis of the through-hole, an end face on the one end side of the multi-core fiber is inclined toward the same side as a side toward which the inclined plane is inclined with respect to the perpendicular plane, and

$$-(0.23 \times B - 3.3)^2 - (C + x) + 112 \geqq 0$$

is satisfied,
in which a radius of curvature of the spherical plane is B (mm), an eccentricity amount which is a distance between an intersection point between the center axis and the spherical plane and a top position most protruding from a line connecting edges of the end face in a cross section passing through the center axis and perpendicular to the inclined plane is C ($\mu$m), and a distance between the center axis and a center of the core positioned farthest from the center axis when viewed along the center axis is x.

In a case of connecting a pair of optical connectors in which an end portion of the ferrule housing the one end side of the multi-core fiber is obliquely polished, the present inventors have intensively studied conditions for physical contact between the cores. As a result, it has been found that the cores of the multi-core fibers that face each other are in physical contact with each other when each optical connector satisfies the above expression. Therefore, with the optical connector according to the present invention, reflection at a connecting part of the multi-core fibers can be suppressed.

Further, a second aspect of the present invention is the optical connector according to the first aspect, in which

$$-(0.33 \times B + 0.31)^2 - (C + x) + 99.4 \geqq 0$$

is satisfied.

In addition to the condition of the first aspect, when at least one optical connector satisfies this condition, the cores of the multi-core fibers that face each other can be more firmly brought into physical contact with each other, and the reflection at the connecting part of the multi-core fibers can be further suppressed.

A third aspect of the present invention is the optical connector according to the first or second aspect, in which

$$\Delta\theta \leqq 2sin^{-1}\left(\frac{C}{2B}10^{-3}\right)$$

is satisfied,

in which a deviation amount of an angle formed by the inclined plane and the perpendicular plane from 8 degrees is $\Delta\theta$.

In general, in an angled physical contact (APC) connector, the angle of the inclined plane with respect to the perpendicular plane is approximately 8 degrees. This is defined in IEC 61755-3-2 and JIS C5965-3-2. When the deviation amount $\Delta\theta$ of the inclined plane from 8 degrees satisfies the above expression, if the deviation amount $\Delta\theta$ is constant, the eccentricity amount C can be decreased by decreasing the curvature radius B (mm). Alternatively, when the deviation amount $\Delta\theta$ of the inclined plane from 8 degrees satisfies the above expression, B (mm) as the curvature radius and C ($\mu$m) as the eccentricity amount can easily satisfy the expression of the first aspect.

A fourth aspect of the present invention is the optical connector according to any one of the first to third aspects further including a guide key provided on a housing to which the ferrule is fixed in parallel with a longitudinal direction of the through-hole, in which a key error which is an angle formed by a perpendicular line of the inclined plane and the center axis of the through-hole when viewed in a direction perpendicular to a plane passing through a center axis of the guide key and the center axis of the through-hole is 0.4 degrees or less.

The guide key may be provided in the optical connector. However, due to manufacturing variations or the like, when the optical connector is disposed with the guide key facing upward and viewed from the side, a direction perpendicular to the inclined plane may deviate in a vertical direction with respect to the longitudinal direction of the through-hole indicated by the guide key. If the key error, which is the deviation amount, is 0.4 degrees or less, the reflection at the connecting part of the multi-core fibers can be further suppressed.

A fifth aspect of the present invention is the optical connector according to any one of the first to fourth aspects, in which a diameter of the ferrule is 2.5 mm.

As described above, according to the present invention, it is possible to provide an optical connector capable of suppressing reflection at a connecting part.

Brief Description of Drawings

[FIG. 1] FIG. 1 is a view schematically illustrating an optical connector according to an embodiment of the present invention.

[FIG. 2] FIG. 2 is a view illustrating a state of a cross section perpendicular to a longitudinal direction of a multi-core fiber in FIG. 1.

[FIG. 3] FIG. 3 is a cross-sectional view illustrating a state of a tip of a ferrule in FIG. 1.

[FIG. 4] FIG. 4 is a cross-sectional view illustrating a state in which the optical connectors are connected to each other.

[FIG. 5] FIG. 5 is a diagram illustrating a relationship between a curvature radius and an eccentricity amount of an end face of the ferrule for physical contact between cores of the multi-core fibers that face each other.

[FIG. 6] FIG. 6 is a diagram illustrating a relationship between an angle between an inclined plane and a perpendicular plane of the end face of the ferrule, the curvature radius, and the eccentricity amount.

[FIG. 7] FIG. 7 is a view illustrating a key error.

[FIG. 8] FIG. 8 is a diagram illustrating a relationship between the key error and a loss due to reflection of light at a connecting part in a case of connecting a pair of optical connectors.

Description of Embodiments

Hereinafter, modes for implementing an optical connector according to the present invention will be exemplified with reference to the accompanying drawings. The embodiments exemplified below are intended to facilitate understanding of the present invention and are not intended to limit the present invention. The present invention can be changed and modified from the following embodiments without departing from the gist of the present invention. In addition, in the present specification, dimensions of each member may be exaggerated for easy understanding.

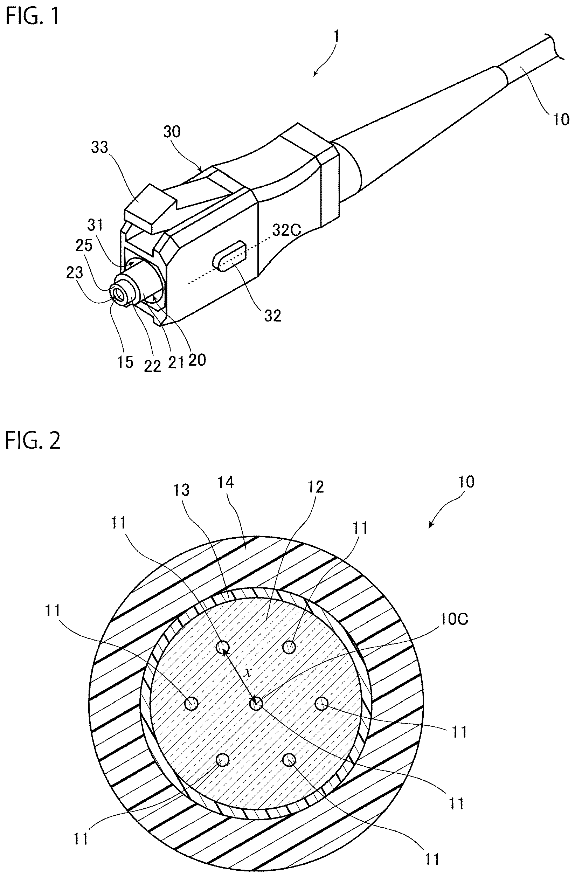

FIG. 1 is a view schematically illustrating an optical connector according to the present embodiment. As illustrated in FIG. 1, an optical connector 1 according to the present embodiment includes a multi-core fiber 10, a ferrule 20, and a housing 30 as main components. Further, examples of the optical connector 1 according to the present embodiment include a subscriber (SC) connector as illustrated in FIG. 1.

The housing 30 houses the ferrule 20, and one end side including a tip portion 22 of the ferrule 20 protrudes from one opening 31 of the housing 30. In addition, the multi-core fiber 10 is led out from a side of the housing 30 that is opposite to a side from which the ferrule 20 protrudes. A guide key 32 is provided on a side face of the housing 30 so as to be in parallel with a longitudinal direction of a through-hole 23 of the ferrule 20 described below. Therefore, a center axis 32C of the guide key is parallel to the longitudinal direction of the through-hole 23. Further, an engagement claw 33 is provided on another side face of the housing 30.

FIG. 2 is a view illustrating a state of a cross section perpendicular to a longitudinal direction of the multi-core fiber 10 in FIG. 1. The multi-core fiber 10 includes a plurality of cores 11, a cladding 12, an inner coating layer 13, and an outer coating layer 14.

In the multi-core fiber 10 according to the present embodiment, one core 11 is disposed at a center 10C of the multi-core fiber 10, and the other six cores 11 are disposed on the same circle centered on the center 10C. That is, the plurality of cores 11 of the multi-core fiber 10 according to the present embodiment are arranged in a so-called 1-6 arrangement. The center 10C is aligned with the center of the cladding 12. A diameter of the core 11 is, for example, 4 $\mu$m or more and 10 $\mu$m or less. A core pitch is, for example, 35 $\mu$m. In this case, a distance between the center 10C and the core 11 positioned on an outer circumferential side is 35 $\mu$m. In addition, the six cores 11 disposed on the outer circumferential side may be arranged to be twisted in the longitudinal direction of the multi-core fiber 10.

The cladding 12 surrounds an outer circumferential face of each core 11. A diameter of the cladding 12 is, for example, 125 $\mu$m.

A refractive index of each core 11 is higher than a refractive index of the cladding 12. Such a core 11 is made of, for example, silica glass added with a dopant such as germanium having a high refractive index, and the cladding 12 is made, for example, of silica glass without any dopant. In addition, the core 11 may be made of silica glass without any dopant, and the cladding 12 may be made of silica glass added with a dopant such as fluorine having a low refractive index.

The inner coating layer 13 covers an outer circumferential face of the cladding 12, and the outer coating layer 14 covers an outer circumferential face of the inner coating layer 13. The inner coating layer 13 and the outer coating layer 14 are each made of a resin such as an ultraviolet curable resin, and the inner coating layer 13 and the outer coating layer 14 are made of resins different from each other.

The ferrule 20 according to the present embodiment includes a cylindrical main body portion 21 and a cylindrical tip portion 22 extending from one end of the main body portion 21 and having a diameter smaller than that of the main body portion 21. For example, a diameter of the ferrule 20 is 2.5 mm. The through-holes 23 of the main body portion 21 and the tip portion 22 are holes having the same diameter. One end side of the multi-core fiber 10 from which the inner coating layer 13 and the outer coating layer 14 have been peeled off is inserted into the through-hole 23. In the present embodiment, one end face 15 of the multi-core fiber 10 is positioned in the through-hole 23 of the ferrule 20 and is slightly retracted from an end face 25 of the ferrule 20. The ferrule 20 is made of a material having a hardness lower than that of the cladding 12 of the multi-core fiber 10. Examples of such a material include zirconia.

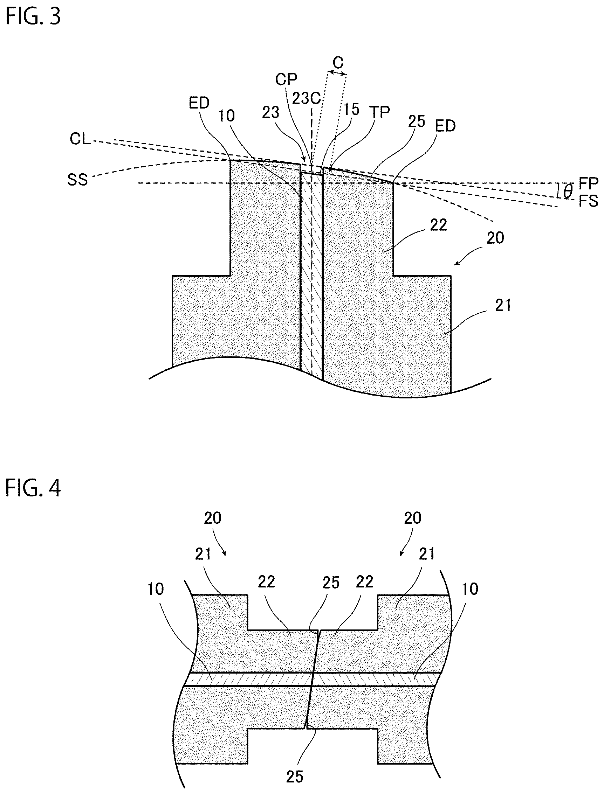

FIG. 3 is a cross-sectional view illustrating a state of a tip of the ferrule 20 in FIG. 1. As illustrated in FIG. 3, an inclined plane FS inclined with respect to a perpendicular plane FP perpendicular to a center axis 23C of the through-hole 23 is assumed, and a spherical plane SS that is tangent to the inclined plane FS on the center axis 23C is assumed. The end face 25 of the ferrule 20 overlaps the spherical plane SS. Therefore, the end face 25 is a part of the spherical plane formed in a convex shape, and is inclined with respect to the perpendicular plane FP. In the present embodiment, an inclination of the inclined plane FS with respect to the perpendicular plane FP is 8 degrees.

An opening of the through-hole 23 is positioned substantially at the center of the end face 25 having a shape in which the spherical plane is inclined as described above. Therefore, the multi-core fiber 10 can be seen through the through-hole 23. The multi-core fiber 10 is inserted into the through-hole 23 such that a center axis of the multi-core fiber 10 positioned in the through-hole 23 and the center axis 23C of the through-hole 23 are aligned with each other. Therefore, the center 10C of the multi-core fiber 10 illustrated in FIG. 2 is positioned on the center axis 23C. The end face 15 of the multi-core fiber 10 is inclined toward the same side as a side toward which the inclined plane FS is inclined with respect to the perpendicular plane FP. An average inclination of the end face 15 with respect to the perpendicular plane FP is preferably the same as the inclination of the inclined plane FS with respect to the perpendicular plane FP. The end face 15 may be an inclined plane as described above, and is preferably a spherical plane. In this case, a curvature radius of the end face 15 is more preferably the same as a curvature radius of the spherical plane SS.

In a case where the optical connectors 1 having such a configuration are connected to each other, an adapter having a pair of guide grooves into which the guide keys 32 of the respective optical connectors 1 are fitted and a pair of engagement holes with which the engagement claws 33 of the respective optical connectors 1 are engaged in a state in which the optical connectors 1 face each other is used. FIG. 4 is a cross-sectional view illustrating a state in which the optical connectors are connected to each other. FIG. 4 only illustrates the tips of the ferrule 20 and the multi-core fiber 10. As a pair of optical connectors 1 is fixed to the adapter, the end faces 25 of the tip portions 22 of the ferrules 20 facing each other are pressed against each other as illustrated in FIG. 4, the tip portions 22 are deformed so as to be slightly crushed, the end faces 15 of the multi-core fibers 10 come into contact with each other, so that the multi-core fibers 10 are connected to each other. For example, in a case where the diameter of the ferrule 20 is 2.5 mm, when a force by which the end faces 25 are pressed against each other is 7.8 N or more and 11.8 N or less, reflection at a connecting part of the multi-core fibers 10 can be further suppressed.

Next, a condition for appropriate physical contact between the cores 11 facing each other in the pair of multi-core fibers 10 in a case where the optical connectors 1 are connected to each other will be described.

First, the curvature radius of the spherical plane SS illustrated in FIG. 3 is defined as B (mm). When the optical connector 1 is viewed in a cross section that passes through the center axis 23C and is perpendicular to the inclined plane FS, the cross-sectional view of FIG. 3 is obtained. Therefore, in the cross-sectional view of FIG. 3, a top position TP of the spherical plane SS is defined as a position most protruding from a line CL connecting edges ED of the end face 25. In addition, an eccentricity amount C ($\mu$m) of the top position TP is defined as a distance between the top position TP and an intersection point CP between the center axis 23C of the through-hole 23 and the spherical plane SS. In addition, a distance between the center axis 23C and the center of the core 11 positioned farthest from the center axis 23C when viewed along the center axis 23C is defined as x ($\mu$m). In a case where the center 10C of the multi-core fiber is positioned on the center axis 23C of the through-hole 23 as described above, x in FIG. 2 is the distance x ($\mu$m).

As described above, the end face 15 of the multi-core fiber 10 is slightly retracted from the end face 25 of the ferrule 20, a retraction amount is equal to or less than a maximum value $A_{maximum}$ (nm), and the maximum value $A_{maximum}$ (nm) is determined by IEC 61755-3-2 so as to satisfy the following Expression (1).

$$A_{maximum} = 1988{\times}B^{-0.795}-B{\times}10^6+\sqrt{(B^2{\times}10^6-C^2)}{\times}10^3-60 \qquad \cdots \quad (1)$$

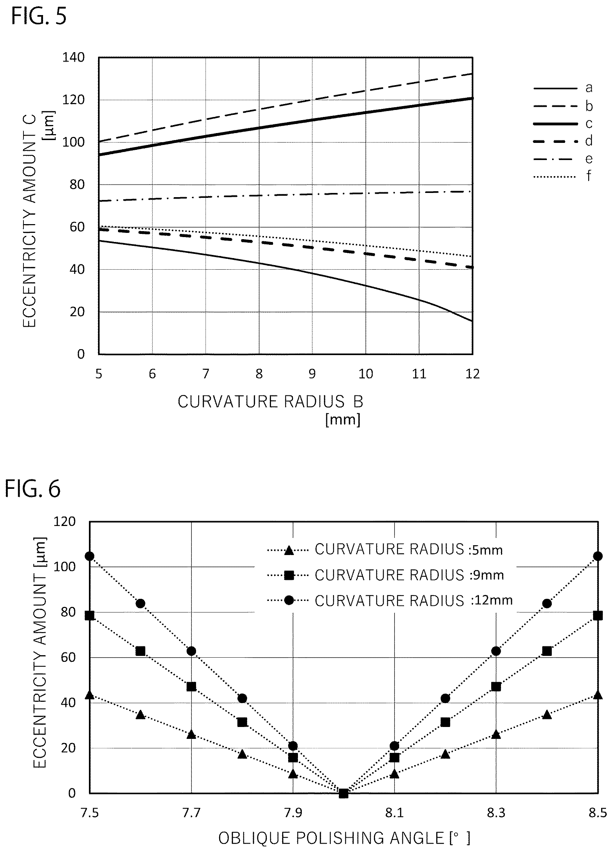

FIG. 5 is a diagram illustrating a relationship between the curvature radius B (mm) and the eccentricity amount C ($\mu$m) on the end face 25 of the ferrule 20 for physical contact between the cores of the multi-core fibers that face each other. First, one optical connector 1 including the ferrule 20 having the curvature radius B (mm) of 10.5 (mm) and the eccentricity amount C ($\mu$m) of 126.4 ($\mu$m) was prepared. Next, a plurality of other optical connectors 1 to be connected to the one optical connector 1 were prepared. Then, the other optical connectors 1 were connected to the one optical connector 1 to measure a reflection attenuation amount, and a plurality of other optical connectors 1 of which the reflection attenuation amount was 55 dB close to an upper limit of a reflection attenuation amount of a general angled physical contact (APC) connector were extracted. The reflection attenuation amount is an amount indicating a ratio of power of return light due to reflection to power of incident light. Next, fitting was performed based on the curvature radius B (mm) and the eccentricity amount C ($\mu$m) on the end face 25 of the ferrule 20 of each of the extracted other optical connectors 1, a result as indicated by a thin solid line a in FIG. 5 was obtained. When the curvature radius B (mm) and the eccentricity amount C ($\mu$m) of one optical connector 1 are substituted into Expression (1), a relationship between the curvature radius B (mm) and the eccentricity amount C ($\mu$m) that obtains the same value as $A_{maximum}$ (nm) obtained by Expression (1) is as indicated by a thin broken line b in FIG. 5. Therefore, when one optical connector 1 including the ferrule 20 of which the curvature radius B (mm) and the eccentricity amount C ($\mu$m) of the end face 25 are positioned on the broken line b and another optical connector 1 including the ferrule 20 of which the curvature radius B (mm) and the eccentricity amount C ($\mu$m) of the end face 25 are positioned on the solid line a are connected, it is considered that the reflection attenuation amount becomes 55 dB. When the curvature radius B (mm) and the eccentricity amount C ($\mu$m) of the end face 25 of the ferrule 20 in the another optical connector 1 connected to the one optical connector 1 are positioned below the solid line a, it is considered that the reflection attenuation amount becomes 55 dB or more. If the reflection attenuation amount is 55 dB or more, it can be said that the reflection at the connecting part is sufficiently suppressed.

Next, one optical connector 1 including the ferrule 20 having the curvature radius B (mm) of 9.1 (mm) and the eccentricity amount C ($\mu$m) of 50.4 ($\mu$m) was prepared. In addition, a plurality of other optical connectors 1 to be connected to the one optical connector 1 were prepared. Then, the other optical connectors 1 were connected to the one optical connector 1 to measure the reflection attenuation amount, and a plurality of other optical connectors 1 of which the reflection attenuation amount was 55 dB were extracted. Next, fitting was performed based on the curvature radius B (mm) and the eccentricity amount C ($\mu$m) on the end face 25 of the ferrule 20 of each of the extracted other optical connectors 1, a result as indicated by a thick solid line c in FIG. 5 was obtained. When the curvature radius B (mm) and the eccentricity amount C ($\mu$m) of one optical connector 1 are substituted into Expression (1), a relationship between the curvature radius B (mm) and the eccentricity amount C ($\mu$m) that obtains the same value as $A_{maximum}$ (nm) obtained by Expression (1) is as indicated by a thick broken line d in FIG. 5. Therefore, when one optical connector 1 including the ferrule 20 of which the curvature radius B (mm) and the eccentricity amount C ($\mu$m) of the end face 25 are positioned on the broken line d and another optical connector 1 including the ferrule 20 of which the curvature radius B (mm) and the eccentricity amount C ($\mu$m) of the end face 25 are positioned on the solid line c are connected, it is considered that the reflection attenuation amount becomes 55 dB. When the curvature radius B (mm) and the eccentricity amount C ($\mu$m) of the end face 25 of the ferrule 20 in the another optical connector 1 connected to the one optical connector 1 are positioned below the solid line c, it is considered that the reflection attenuation amount becomes 55 dB or more.

As described above, a shape of the end face 25 of the ferrule 20 of the other optical connector 1 that is connected to the one optical connector 1 including the ferrule 20 positioned on the broken line b and has the reflection attenuation amount of 55 dB or more needs to be positioned in a relatively narrow region below the solid line a. On the other hand, as described above, a shape of the end face 25 of the ferrule 20 of the other optical connector 1 that is connected to the one optical connector 1 including the ferrule 20 positioned on the broken line d and has the reflection attenuation amount of 55 dB or more is positioned in a relatively wide region below the solid line c. Therefore, if the eccentricity amount of the broken line b is reduced and the broken line b is moved downward, the solid line a is moved upward. As a result, ranges of the curvature radius B (mm) and the eccentricity amount C (μm) that can be taken by the shape of the end face 25 of the ferrule 20 of the other optical connector 1 is widened. Therefore, when such range changes are repeated, a point at which the broken line b and the solid line a intersect each other is obtained for each curvature radius, and fitting is performed, a one-dot chain line e is obtained. When the eccentricity amount of the broken line d is increased and the broken line d is moved upward, the solid line c is moved downward. Similarly, when such range changes are repeated, a point at which the broken line d and the solid line c intersect each other is obtained for each curvature radius, and fitting is performed, a one-dot chain line e is obtained. Therefore, when the pair of optical connectors 1 positioned in a region where the curvature radius B (mm) and the eccentricity amount C (μm) of the end face 25 of the ferrule 20 are below the one-dot chain line e are connected to each other, the reflection attenuation amount is suppressed to 55 dB or more.

The relationship between the curvature radius B (mm) and the eccentricity amount C (μm) indicating the region below the one-dot chain line e is expressed by the following Expression (2).

$$-(0.23 \times B - 3.3)^2 - (C + x) + 112 \geqq 0 \qquad \cdots \quad (2)$$

Therefore, by connecting the pair of optical connectors 1 of which the curvature radius B (mm) and the eccentricity amount C (μm) of the end face 25 of the ferrule 20 satisfy Expression (2), the reflection at the connecting part is sufficiently suppressed. As described above, in the APC connector using the multi-core fiber 10, the end face 25 of the ferrule 20 is subjected to spherical plane polishing, and thus, the end face 15 of the multi-core fiber 10 can also have a spherical shape, and a deviation in angle at the end faces can occur between the core 11 positioned at the center and the core 11 positioned on the outer circumferential side. In this case, the cores 11 positioned on the outer circumferential side can include the core 11 having a reflection attenuation amount higher than the reflection attenuation amount of the core 11 positioned at the center, and the core 11 having a reflection attenuation amount lower than the reflection attenuation amount of the core 11 positioned at the center. Here, if the reflection attenuation amount is 55 dB or more, it is possible to approach a range of 60 dB or more, which is a range of the reflection attenuation amount defined by standards (IEC 61755-2-2 and JIS C5965-2-2) in all the cores 11. Therefore, the reflection at the connecting part can be sufficiently suppressed.

Further, it is preferable that the curvature radius B (mm) and the eccentricity amount C (μm) of the end face 25 of the ferrule 20 of at least one optical connector 1 are positioned in a region below a dotted line f in FIG. 5. Such a region is represented by the following Expression (3).

$$-(0.33 \times B + 0.31)^2 - (C + x) + 99.4 \geqq 0 \qquad \cdots \quad (3)$$

When the curvature radius B (mm) and the eccentricity amount C (μm) of the end face 25 of the ferrule 20 of at least one optical connector 1 of the pair of optical connectors 1 satisfying Expression (2) above satisfy Expression (3), it is possible to further approach the range of 60 dB or more, which is the range of the reflection attenuation amount defined by the above standards in all the cores 11, and it is possible to further suppress the reflection at the connecting part.

Next, an angle of the inclined plane FS with respect to the perpendicular plane FP will be considered. The angle of the inclined plane FS of the APC connector is defined as 8 degrees according to IEC 61755-3-2 and JIS C5965-3-2. Therefore, also in the end face 25 of the ferrule 20 according to the present embodiment, the angle of the inclined plane FS with respect to the perpendicular plane FP is 8 degrees. In addition, in a case where Expression (2) above is satisfied, and in a case where the curvature radius B (mm) and the eccentricity amount C (μm) of the end face 25 of the ferrule 20 satisfy Expression (2), the angle of the inclined plane FS with respect to the perpendicular plane FP is about 8 degrees in many cases. Therefore, a deviation amount of the inclined plane FS satisfying Expression (2) from 8 degrees will be considered. FIG. 6 is a diagram illustrating a relationship between the angle of the inclined plane FS with respect to the perpendicular plane FP of the end face 25 of the ferrule 20, the curvature radius B, and the eccentricity amount C. In FIG. 6, the angle of the inclined plane FS with respect to the perpendicular plane FP is described as an oblique polishing angle, the curvature radius B is described as a curvature, and the eccentricity amount C is described as an apex offset. As illustrated in FIG. 6, in a case where the curvature radius B (mm) is constant, the eccentricity amount ($\mu$m) is increased as the deviation amount of the angle of the inclined plane FS with respect to the perpendicular plane FP from 8 degrees is increased. In a case where the eccentricity amount C ($\mu$m) is constant, the curvature radius B (mm) is decreased as the deviation amount of the angle of the inclined plane FS with respect to the perpendicular plane FP from 8 degrees is increased. In a case where the deviation amount is $\Delta\theta$, it is preferable to satisfy the following Expression (4). In a case where the deviation amount $\Delta\theta$ of the inclined plane from 8 degrees satisfies Expression (4), if the deviation amount $\Delta\theta$ is constant, the eccentricity amount C ($\mu$m) can be decreased by decreasing the curvature radius B (mm). Alternatively, the curvature radius B (mm) and the eccentricity amount C ($\mu$m) can easily satisfy Expression (2).

$$\Delta\theta \leqq 2sin^{-1}\left(\frac{C}{2B}10^{-3}\right) \quad \cdots \quad (4)$$

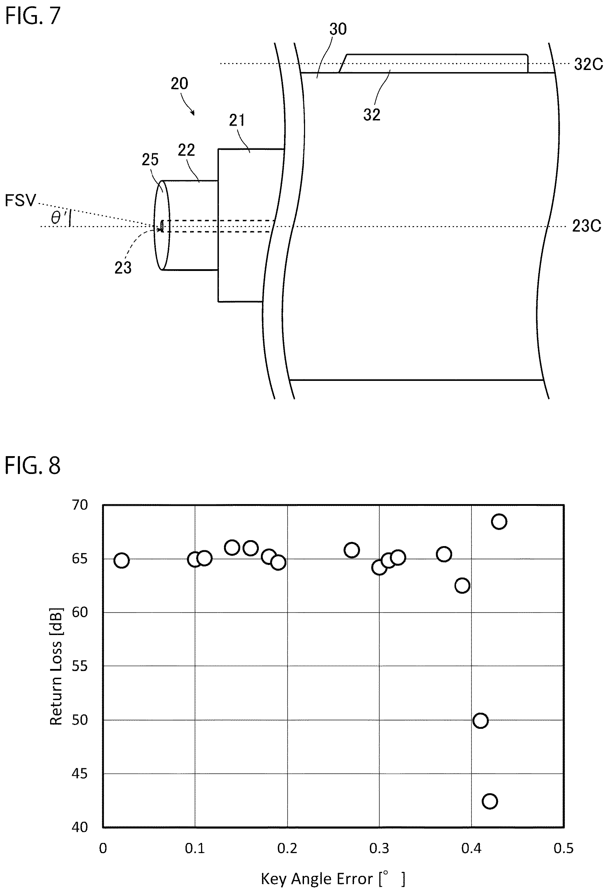

Next, a key error will be considered. As described above, the guide key 32 indicating the longitudinal direction of the through-hole 23 in the ferrule 20 is provided on the housing 30. FIG. 7 is a view illustrating the key error, and the optical connector 1 is viewed in a direction perpendicular to a plane passing through the center axis 32C of the guide key 32 and the center axis 23C of the through-hole 23. That is, FIG. 7 is a view of the optical connector 1 disposed with the guide key 32 facing upward when viewed from the side. The end face 25 is inclined toward the side toward which the inclined plane FS is inclined, and in the present embodiment, the inclined plane FS is inclined toward the side from which the optical connector 1 is viewed with reference to the perpendicular plane FP. Accordingly, the end face 25 is visible in FIG. 7. FIG. 3 is a cross-sectional view of a plane passing through the center axis 32C of the guide key 32 and the center axis 23C of the through-hole 23. When the optical connector 1 is viewed as illustrated in FIG. 7, the key error is an angle $\theta'$ formed by a perpendicular line FSV of the inclined plane FS and the center axis 23C of the through-hole 23. Therefore, when the optical connector 1 is viewed as illustrated in FIG. 7, if the key error occurs, the perpendicular line FSV is inclined in a vertical direction. In FIG. 7, each $\theta'$ is illustrated to be larger than an actual value for the sake of clarity in the drawing. An error in an orientation of the inclined plane FS may occur due to an error in an orientation of the end face 25 caused by a manufacturing error or the like of the optical connector 1, and thus, the key error may occur. FIG. 8 is a diagram illustrating a relationship between the key error and a loss due to reflection of light at the connecting part in a case of connecting the pair of optical connectors 1. As illustrated in FIG. 8, if the key error is 0.4 degrees or less, in a case of connecting the optical connectors 1 to each other, a probability of reducing the loss due to the reflection of the light at the connecting part is increased, the reflection attenuation amount can be made larger than 60 dB, so that a change in the reflection attenuation amount can be suppressed every time the connection is made. Therefore, it can be seen that, if the key error is 0.4 degrees or less, the reflection attenuation amount tends to be stabilized and the loss is reduced.

As described above, in the optical connector 1 according to the present embodiment, the end face 25 of the ferrule 20 overlaps the spherical plane SS, and the radius B (mm) of curvature of the spherical plane SS, the eccentricity amount C ($\mu$m), which is the distance from the intersection point CP between the center axis 23C and the spherical plane SS to the top position TP, and the distance x between the center axis 23C and the center of the core 11 positioned farthest from the center axis 23C satisfy Expression (2). Therefore, by connecting such optical connectors 1 to each other, the cores 11 of the multi-core fibers 10 facing each other are brought into physical contact with each other, so that the reflection at the connecting part of the multi-core fibers 10 can be suppressed.

Although the present invention has been described with reference to the above-described embodiment as an example, the present invention is not limited to the above-described embodiment.

In the above-described embodiment, the multi-core fiber 10 in which the number of cores 11 is seven is exemplified, but the number of cores 11 is not limited to seven as long as the number is plural. For example, the core 11 does not have to be disposed at the center of the cladding 12.

In the above-described embodiment, an example in which one end face 15 of the multi-core fiber 10 is positioned in the through-hole 23 of the ferrule 20 and slightly retracts from the end face 25 of the ferrule 20 has been described. However, the one end face 15 of the multi-core fiber 10 may slightly protrude from the end face 25 of the ferrule 20. In this case, a protruding amount of the multi-core fiber 10 is 100 nm or less.

According to the present invention, an optical connector capable of suppressing reflection at a connecting part can be provided, and can be used, for example, in the field of optical communication and the like.

**Claims**

**1.** An optical connector comprising:

a multi-core fiber including a plurality of cores; and

a ferrule having a through-hole into which one end side of the multi-core fiber is inserted, wherein an end face of the ferrule overlaps a spherical plane that is tangent to an inclined plane on a center axis of the through-hole, the inclined plane being inclined with respect to a perpendicular plane perpendicular to the center axis,

an end face on the one end side of the multi-core fiber is inclined toward a same side as a side toward which the inclined plane is inclined with respect to the perpendicular plane, and

$$-(0.23 \times B - 3.3)^2 - (C + x) + 112 \geqq 0$$

is satisfied,

in which a curvature radius of the spherical plane is B (mm), an eccentricity amount which is a distance between an intersection point between the center axis and the spherical plane and a top position most protruding from a line connecting edges of the end face in a cross section passing through the center axis and perpendicular to the inclined plane is C ($\mu$m), and a distance between the center axis and a center of the core positioned farthest from the center axis when viewed along the center axis is x.

2. The optical connector according to claim 1, wherein

$$-(0.33 \times B + 0.31)^2 - (C + x) + 99.4 \geqq 0$$

is satisfied.

3. The optical connector according to claim 1 or 2, wherein

$$\Delta\theta \leqq 2\sin^{-1}\left(\frac{C}{2B}10^{-3}\right)$$

is satisfied,

in which a deviation amount of an angle formed by the inclined plane and the perpendicular plane from 8 degrees is $\Delta\theta$.

4. The optical connector according to any one of claims 1 to 3, further comprising

a guide key provided on a housing to which the ferrule is fixed in parallel with a longitudinal direction of the through-hole, wherein

a key error which is an angle formed by a perpendicular line of the inclined plane and the center axis of the through-hole when viewed in a direction perpendicular to a plane passing through a center axis of the guide key and the center axis of the through-hole is 0.4 degrees or less.

5. The optical connector according to any one of claims 1 to 4, wherein a diameter of the ferrule is 2.5 mm.

FIG. 1

FIG. 2

FIG. 3

FIG. 4

FIG. 5

FIG. 6

FIG. 7

FIG. 8

## INTERNATIONAL SEARCH REPORT

| International application No. |
| --- |
| **PCT/JP2023/026692** |

| A. | CLASSIFICATION OF SUBJECT MATTER |
| --- | --- |

*G02B 6/38*(2006.01)i; *G02B 6/02*(2006.01)i
FI:    G02B6/38; G02B6/02 461

According to International Patent Classification (IPC) or to both national classification and IPC

| B. | FIELDS SEARCHED |
| --- | --- |

Minimum documentation searched (classification system followed by classification symbols)

G02B6/36-6/40; G02B6/02-6/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2019/189312 A1 (SUMITOMO ELECTRIC INDUSTRIES, LTD.) 03 October 2019 (2019-10-03)<br>    paragraphs [0019]-[0038], fig. 1-6 | 1-5 |
| Y | JP 10-10369 A (YUGEN KAISHA TM KIKAKU) 16 January 1998 (1998-01-16)<br>    paragraphs [0017]-[0031], fig. 1, 2 | 1-5 |
| Y | US 5734769 A (ADC TELECOMMUNICATIONS, INC.) 31 March 1998 (1998-03-31)<br>    column 4, line 66 to column 7, line 13, fig. 6-12 | 1-5 |
| Y | US 5412747 A (EMIT SEIKO CO., LTD.) 02 May 1995 (1995-05-02)<br>    column 5, line 66 to column 6, line 44, fig. 3 | 1-5 |
| Y | JP 2015-222421 A (TOTO LTD.) 10 December 2015 (2015-12-10)<br>    paragraphs [0035], [0040], fig. 1 | 1-5 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 September 2023** | **19 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/026692**

| Patent document cited in search report | | | Publication date (day/month/year) | Patent family member(s) | | | Publication date (day/month/year) |
|---|---|---|---|---|---|---|---|
| WO | 2019/189312 | A1 | 03 October 2019 | JP | 2021-119363 | A | |
| | | | | TW | 202001311 | A | |
| JP | 10-10369 | A | 16 January 1998 | US | 6024499 | A | |
| | | | | column 3, line 50 to column 5, line 64, fig. 1, 2 | | | |
| | | | | EP | 814354 | A2 | |
| US | 5734769 | A | 31 March 1998 | WO | 1998/031503 | A1 | |
| US | 5412747 | A | 02 May 1995 | (Family: none) | | | |
| JP | 2015-222421 | A | 10 December 2015 | US | 2015/0316727 | A1 | |
| | | | | paragraphs [0042], [0047], fig. 1A, 1B | | | |
| | | | | CN | 105044850 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10989882 B2